# EUROPEAN PATENT APPLICATION

(11) **EP 3 584 116 A1**
(43) Date of publication of application: **25.12.2019**
(21) Application number: 18000538.1
(22) Date of filing: 19.06.2018
(51) Int. Cl.: B60P 7/08, B60P 7/12

(54) **ROLL PREVENTING WEDGE**

(71) Applicant: OECO CPS d.o.o., 8273 Leskovec pri Krskem (SI)
(72) Inventor: Ottonelli, Stephane Pascal, 07013 Palma de Malorca (ES); Klun, Drago, 6257 Pivka (SI); Sebalj, Milan, 8273 Leskovec pri Krskem (SI)

(57) **Abstract**

The proposed invention is a device which prevents the generally uncontrolled rolling motion of an arbitrary cylindrically shaped object, preferably a gas bottle, for example in the boot of a vehicle, and thereby prevents the risks, for example to persons in the compartment where the gas bottles are transported. The device according to the invention is realized in one piece and is shaped in the form of a wedge. Generally it is made of an arbitrary material that is strong enough to withstand the dynamic loads originating from a cylindrical object weighing approximately 100 kg. The wedge according to the invention is in the preferred embodiment made of ABS plastics. The wedge according to the invention is defined by its body being bounded by a rectangular base face, an inclined face, two faces, and two dividing faces. Two said faces define the wedge shape of device according to the invention. The angle between the said faces is approximately between 16° and 45°. A relatively small angle makes it possible for the device to usually wedge by itself and thereby prevent the gas bottle from sliding. There are shaped teeth arranged all over the bottom surface of the base. The teeth are sharp and shaped so as to lodge into the underlying surface, and in this way ensure the wedge has a good grip on a soft surface, and thereby prevent the wedge and the cylindrical vessel with it from moving in the transversal direction.

## Description

The proposed invention is a device that prevents the generally uncontrolled rolling motion of an arbitrary cylindrically shaped object, preferably a gas bottle, for example in the boot of a vehicle, and thereby prevents the injury risks, for example to persons in the compartment where the gas bottles are transported, associated with uncontrolled movements of said objects.

### TECHNICAL PROBLEM AND STATE-OF-THE-ART

In transport, regularly occurring horizontal and vertical forces are transferred to the cargo.
The only situation where no forces are acting upon the cargo (except from its weight) is driving in a straight line with constant speed. The more one deviates from these conditions (for example by braking sharply, rapidly accelerating, making aggressive turns at intersections, suddenly switching lanes etc.), the greater the forces that are acting upon the cargo. The forces occurring in road transport are mostly horizontal. When transporting dangerous goods inside of vessels such as for example gas bottles, the said forces are acting upon them and may present a safety risk to the people in the vehicle as a result of uncontrolled movements of said vessels, preferably gas bottles, which may injure the persons situated in the same compartment if the vehicle crashes. In the case of a gas bottle, the gas bottle valve may also get damaged, causing dangerous goods such as gases to escape into the compartment with several dangerous consequences.
No adequate technical solution for this problem is available in the state-of-the-art.
In practical terms, the individuals who are transporting for example gas bottles place those in the boot of the vehicle or even inside the vehicle cabin, and prevent them from rolling or turning by blocking them up with different objects, or by wrapping them, for example in blankets, clothes or similar.

The previous solutions are not adequate and fail to satisfactorily mitigate the risks for people inside the vehicle. It is especially dangerous to transport a gas bottle inside the cabin. If the gas bottle is damaged, gas may escape from it. In case the vehicle crashes, dangerous movements of the gas bottle may even mortally injure the people inside the cabin. The solution for the said problem is a specially shaped wedge, which is positioned so as to prevent the gas bottle from sliding.
The advantages of the wedge according to the invention are as follows:
- it stops cylindrical objects from moving in all four directions,
- it improves the safety of individuals who decide to transport gas bottles inside passenger vehicles,
- it changes the habits of people to only transport gas bottles in the boots of their vehicles,
- it is an economical solution that is very affordable to all users,
- the small size of the device makes it handy for storage inside the vehicle.

### DETAILED DESCRIPTION OF THE TECHNICAL SOLUTION

The attached descriptions and figures will make further advantages and the value of this invention evident even to an average expert.
**Figure 1** Axonometric view of the device according to the invention
**Figure 2** Axonometric view of the device according to the invention from the bottom side
**Figure 3** Example of the use of wedge according to the invention with a gas bottle

The device according to the invention 10 is realized in one piece and is shaped in the form of a wedge. Generally it is made of an arbitrary material that is strong enough to withstand the dynamic loads originating from a cylindrical object weighing approximately 100 kg. The device according to the invention is in accordance with the preferred embodiment made of ABS plastics.

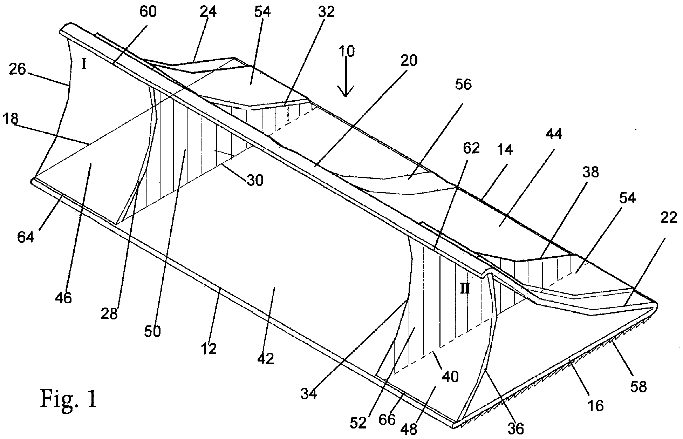

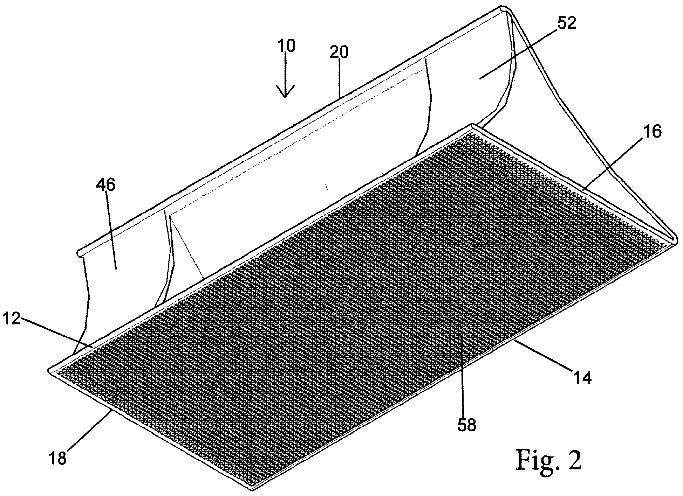

The wedge according to the invention 10 is defined by its body being bounded by a rectangular base 42, an inclined face 44, faces 46 and 48, and dividing faces 50 and 52.
The face 42 is defined by two parallel edges 12 and 14 and two transversal edges 16 and 18 lying between them. The said edges meet in four vertices, incorporated on the face 42 as shown in Figure 1.
The wedge 10 according to the invention further incorporates a rectangular convex face 44, defined by two straight parallel edges 14 and 20 and two transversal convex edges 22 and 24 lying between the two. The said edges meet in four vertices, incorporated on the face 44. The edges 22 and 24 are in the preferred embodiment shaped as an arc of a circle with radius approximately 150 mm, defining the shape of face 44 as it is shown in Figure 1. Said shape of face 44 provides the best contact with the cylindrical vessel surface in the preferred embodiment when transporting gas bottles, thereby improving the function of the wedge according to the invention to stop the cylindrical objects from moving in all four directions. The face 44 is inclined (situated at an angle) from said face 42, the two forming the wedge-shaped device according to the invention. The faces 42 and 44 join to form the edge 14. The angle of inclination of face 44 from face 42 can be approximately between 16° and 45°. A relatively small angle substantially makes it possible for the device to usually wedge by itself and thereby prevent the gas bottle from sliding.
Further, the device according to the invention also comprises two faces 46 and 48, in preferred embodiment positioned at the two far ends of the wedge according to the invention. Both faces 46 and 48 are approximately rectangular, slightly convex and in the preferred embodiment of same dimensions. The face 46 incorporates the section 64 of arbitrary length on the edge 12 and the section 60 on the parallel edge 20 of the same length, as well as two slightly convex edges 26 and 28 in the transversal direction. The face 48 incorporates the section 66 of arbitrary length on the edge 12 and a section of the same length on the edge 20, as well as two slightly convex edges 34 and 36. In the preferred embodiment two dividing faces 50 and 52 protrude towards the inside of the device according to the invention 10 from edge 12 to edge 14. The face 50 is defined by edge 28, edge 30 and edge 32, while the face 52 is defined by edge 34, edge 38 and edge 40. The dividing faces 50 and 52 substantially guarantee the required mechanical strength for the wedge according to the invention by supporting the inclined face 44, which is under load from the dynamic forces acting upon the wedge according to the invention and originating from the cargo, generally due to braking sharply, rapidly accelerating, making aggressive turns at intersections, suddenly switching lanes, and similar. In another embodiment the space between the face 42 and the face 44 could be filled with solid material.
The said forces acting upon the wedge try to move it generally in the transversal direction (with respect to the position of the cylindrical vessel). It is therefore extremely important to increase the friction between the bottom face 42 of the wedge and the underlying surface, for example the liner of the boot where the said vessel is situated. The invention provides an original solution for this problem.
There are specially shaped teeth arranged all over the bottom surface of said face 42. The teeth are sharp and shaped so as to lodge into the underlying surface and in this way ensure the wedge has a good grip on a soft surface, in the preferred embodiment a boot liner, and thereby prevent the wedge and the cylindrical vessel with it from moving in the transversal direction in the event of dynamic loads originating from a cylindrical vessel weighing for example 100 kg, which is driven to roll for example by inertia.
The cross-section of said teeth is shaped approximately as a right-angled triangle, with the apex opposite of the hypotenuse pointing downwards and away from the bottom surface of face 42, as shown in Figure 2.
The inclined surface 44 further incorporates two symmetrically placed ribbons of elastic material, in the preferred embodiment approximately 30x80 mm in size, made of TPE rubber or other elastic material, which improve the contact with said cylindrical vessel. The first ribbon is positioned at an arbitrary distance from edge 24 and placed between the two parallel edges 14 and 20 and the slot 56, and the second ribbon is positioned at an arbitrary distance from edge 22 between the two parallel edges 14 and 20 and the slot 56. The said rubber ribbons improve the grip of the wedge 10 on a cylindrical vessel.
The slot 56 guarantees a better grip, for example on a gas bottle. It is able to house a weld that may be situated at the middle of the body of an arbitrary gas bottle.

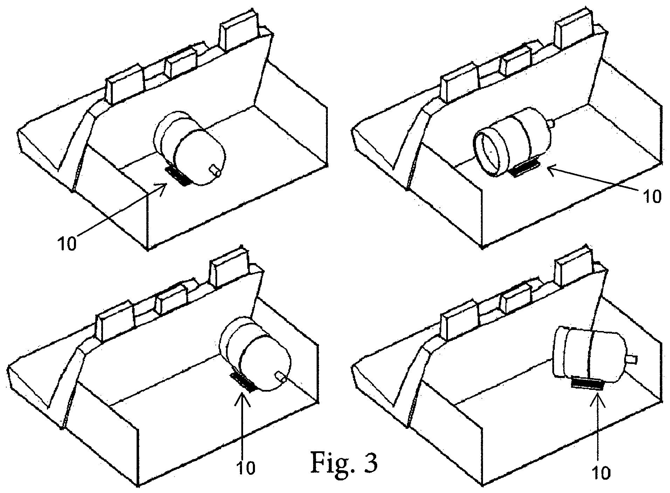

It is positioned approximately at the middle of the inclined face 44 and is groove-shaped.
The wedge according to the invention 10 is used to block an arbitrary cylindrical vessel for transport, for example a gas bottle, and firmly hold it down as shown in Figure 3.
The device according to the invention provides a complete solution to problems related with the transport of cylindrical vessels in passenger vehicles. The previous solutions are not adequate and fail to satisfactorily mitigate the risks for people inside the vehicle.

The advantages of the wedge according to the invention are as follows:
- it substantially prevents cylindrical objects from rolling in the transversal direction from its transport position,
- it improves the safety of individuals who decide to transport gas bottles inside passenger vehicles,
- it changes the habits of people to only transport gas bottles in the boots of their vehicles,
- it is an economical solution that is very affordable for all users,
- the small size of the device makes it handy for storage inside the vehicle.

The above descriptions include a lot of specifics, but these are not limiting to the scope of the invention and are only used to illustrate the implementations of the invented product. The scope of the invention is determined by the patent claims hereinafter and not by the examples described above.

## Claims

1. A roll preventing wedge, comprising a base plate and an inclined plate, **characterised by** the base plate having **shaped teeth** arranged all over its bottom surface, whereby a good grip of said base plate on a soft surface is ensured.

2. The roll preventing wedge according to the claim 1, **characterised by** the said teeth having approximately the form of a triangle in the cross-section, with the apex of the triangle pointing downwards from the bottom surface of the base plate.

3. The roll preventing wedge according to the claims 1 and 2, **characterised in that** the angle between the two wedge faces forming the wedge-shaped device according to the invention is in the range from 16° to 45°.

4. The roll preventing wedge according to the claims from 1 to 3, **characterised in that** face which provides contact with the cylindrical vessel is shaped approximately as an arc of a circle.

5. The roll preventing wedge according to the claims from 1 to 4, **characterised by two or more dividing faces** protruding towards the inside of the wedge according to the invention, whereby the said dividing faces guarantee the required mechanical strength for the wedge according to the invention.

6. The roll preventing wedge according to the claims from 1 to 5, **characterised in that** the inclined plate comprises at least two ribbons of elastic material, whereby the said ribbons improve the grip of the wedge according to the invention on a cylindrical vessel.

7. The roll preventing wedge according to the Claims from 1 to 5, **characterised by** the inclined plate incorporating a groove, placed transversally with respect to the two longer edges of the said plate.
